# EUROPEAN PATENT SPECIFICATION

(11) **EP 2 866 519 B1**
(45) Date of publication and mention of the grant of the patent: **30.11.2016**
(21) Application number: 14179025.3
(22) Date of filing: 30.07.2014
(51) Int. Cl.: H05B 6/76, F24C 15/02

(54) **A gasket for a heat-charged cavity of an appliance with microwave heating function**
Dichtung für einen wärmeaufgeladenen Hohlraum einer Einrichtung mit Mikrowellenheizfunktion
Joint d'étanchéité pour une cavité thermiquement chargée d'un appareil avec fonction de chauffage à micro-ondes

(30) Priority: 23.10.2013 WO PCT/EP2013/072149; 27.01.2014 WO PCT/EP2014/051487
(43) Date of publication of application: 29.04.2015
(73) Proprietor: Electrolux Appliances Aktiebolag, 105 45 Stockholm (SE)
(72) Inventor: Hofmann, Arnd, 91541 Rothenburg ob der Tauber (DE); Schlötterer-Fratoianni, Klaus, 91541 Rothenburg ob der Tauber (DE)
(74) Representative: Electrolux Group Patents

(56) References cited:
- WO-A1-2009/156613
- GB-A- 1 351 457
- US-A- 3 846 608
- US-A- 4 512 331

## Description

The present invention relates to a gasket for a heat-charged cavity of an appliance with microwave heating function according to the preamble of claim 1. Further, the present invention relates to an appliance with microwave heating function for domestic or professional use, wherein the appliance includes at least one heat-charged cavity enclosed by at least one gap.

In the near future, further innovative appliances with microwave heating function are expected. For example, dish-washers, washing machines, freezers with a fast defrosting system and laundry dryers may be heated up by microwaves. The removal of excess liquids, vapours and/or humidity from the heated cavity of the appliance may be improved by the microwave heating function.

Such an appliance requires a sealing of the gaps around the heated cavity. Usually the sealing is realized by one or more gaskets. Said gaskets must be heat resistant and impermeable for liquids, vapours, humidity and/or heat. However, within some types of gaps a microwave transparency is necessary, while other types of gaps should be sealed against microwaves.

US 3,846,608 discloses a high temperature resistant door seal for a microwave oven. A ferrite dissipative seal assembly includes an elongated wire mesh spring, a series of ferrite strips and a braided glass fibre sheath. The braided glass fibre sheath encloses the elongated wire mesh spring and the series of ferrite strips, wherein a seam is formed between the elongated wire mesh spring and the ferrite strips.

It is an object of the present invention to provide an improved gasket for an appliance with microwave heating function, wherein the properties of the gasket are adapted to the requirements of said appliance by low complexity.

The object is achieved by the gasket according to claim 1.

According to the present invention the first gasket part is impermeable for steam, vapour and/or humidity and the second gasket part includes at least one electrically conductive material and a U-shaped cross-section, wherein the at least one flexible sheet of the interconnecting gasket part is partially received by the legs of the U-shaped cross-section of the second gasket part.

The first gasket part and the second gasket part of the gasket have different functions. The first gasket part as well as the second gasket part is heat resistant and impermeable for steam, vapour and/or humidity. However, the first gasket part is made of an elastic material or a compound of elastic materials, while the second gasket part includes at least one electrically conductive material. Thus, the first gasket part is transparent to microwaves, while the second gasket part cannot be penetrated by microwaves.

The interconnecting gasket part includes at least one flexible sheet.

The at least one flexible sheet of the interconnecting gasket part encloses at least partially the first gasket part.

The at least one flexible sheet of the interconnecting gasket part is partially received by the second gasket part.

According to the present invention, the second gasket part includes a U-shaped cross-section. Thus, the second gasket part forms a U-shaped profile part.

The at least one flexible sheet of the interconnecting gasket part is partially received by the legs of the U-shaped cross-section of the second gasket part.

The first gasket part, the second gasket part and/or the interconnecting gasket part may be made of technical textiles, preferably on the basis of glass fibres.

For example, the second gasket part includes glass fibres coated by at least one electrically conductive material, preferably metallic material.

According to another example, the second gasket part includes glass fibres interwoven with fibres made of at least one electrically conductive material, preferably metallic material.

Alternatively or additionally, the second gasket part may include small metallic particles equally distributed within said second gasket part.

Furthermore, the second gasket part includes at least one metal grid.

The present invention relates further to an appliance with microwave heating function for domestic or professional use, wherein the appliance includes at least one heat-charged cavity enclosed by at least one gap, wherein the at least one gap is at least partially filled by a gasket mentioned above. Preferably, the appliance comprises at least two adjacent gaps, wherein a first gap is at least partially filled by the first gasket part and a second gap is at least partially filled by the second gasket part.

In particular, the first gap is arranged between a door at one side and an inner chassis part and/or outer chassis part of the appliance at another side, wherein said first gap occurs in a closed state of the door. Thereby, the inner chassis part may be the cavity, while the outer chassis part may be a front frame.

In contrast, the second gap may be arranged between an inner chassis part and an outer chassis part of the appliance, in particular the second gap is arranged between the cavity and the front frame, wherein the second gap forms a thermal barrier.

For example, the cross-sections of the first gap and the second gap are arranged orthogonal to each other.

Alternatively or additionally, the cross-sections of the first gap and the second gap may be arranged serially to each other.

Novel and inventive features of the present invention are set forth in the appended claims.

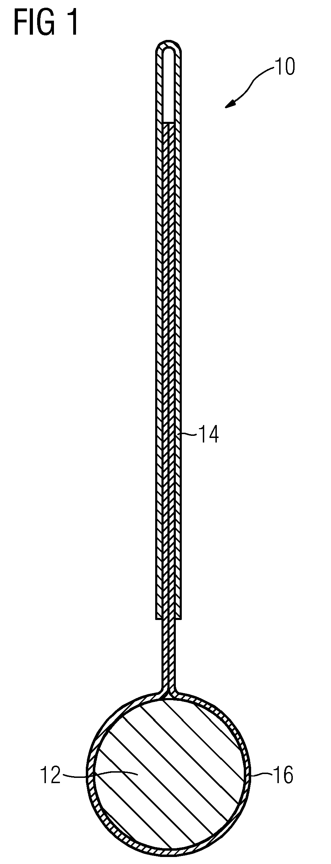

The present invention will be described in further detail with reference to the drawing, in which
- FIG 1: illustrates a schematic cross-sectional view of as gasket according to a preferred embodiment of the present invention.

FIG 1 illustrates a schematic cross-sectional view of as gasket 10 according to a preferred embodiment of the present invention.

The gasket 10 is elongated, wherein the longitudinal axis of said gasket 10 extends perpendicular to the plane of the drawing in FIG 1.

The gasket 10 comprises a first gasket part 12, a second gasket part 14 and an interconnecting gasket part 16. The first gasket part 12, the second gasket part 14 and the interconnecting gasket part 16 are also elongated. The longitudinal axes of the first gasket part 12, the second gasket part 14 and the interconnecting gasket part 16 extend in parallel to each other. The gasket 10 is composed by the first gasket part 12, the second gasket part 14 and the interconnecting gasket part 16 and forms an integral part.

In this example, the first gasket part 12 has a circular cross-section. The first gasket part 12 is resistant against high temperatures. Further, the first gasket part 12 is thermally insulating. Moreover, the first gasket part 12 is impermeable for vapour, steam and humidity. The first gasket part 12 is transparent to microwaves.

The interconnecting gasket part 16 connects the first gasket part 12 and the second gasket part 14. The interconnecting gasket part 16 is made of one or more flexible sheets. In this example, a central portion of the cross-section of the interconnecting gasket part 16 encloses the first gasket part 12, while both end portions of the cross-section of the interconnecting gasket part 16 are received by the second gasket part 14.

In this example, the second gasket part 14 has a U-shaped cross-section, wherein the end portions of the cross-section of the interconnecting gasket part 16 are received between the legs of said U-shaped cross-section. In other words, the second gasket part 14 forms a U-shaped profile part. In this example, the legs of the U-shaped profile part are relative long in view of the width of said U-shaped profile part. The second gasket part 14 is also resistant against high temperatures. Furthermore, the second gasket part 14 cannot be penetrated by microwaves. The second gasket part 14 is also thermally insulating and impermeable for vapour, steam and humidity.

The first gasket part 12 blocks heat and is impermeable for vapour, steam and humidity, but transparent to microwaves. Preferably, the first gasket part 12 is made of material including technical textiles. In particular, said technical textiles base on glass fibres. The first gasket part 12 is made of an elastic material or by an elastic compound of materials. A gap of variable size can be sealed by the first gasket part 12 made of elastic material. For example, said variable size of the gap may be caused by tolerances of production. The first gasket part 12 with the elastic material allows the required seal effect along the sealing line of the gasket 10.

The second gasket part 14 is made of at least one heat temperature resistant material. The second gasket part 14 blocks heat and is impermeable for vapour, steam and humidity. Additionally, the second gasket part 14 cannot be penetrated by microwaves. The second gasket part 14 or at least an outer layer of said second gasket part 14 includes metallic material or materials. Preferably, the metallic material includes technical textiles. For example, said technical textiles base on metallized glass fibres. The technical textiles or the fibres may be coated by electrically conductive material. Further, the glass fibres may be connected with fibres of electrically conductive material, preferably metallic material. For example, the glass fibres may be interwoven with fibres of electrically conductive material, preferably metallic material. Alternatively or additionally, the second gasket part may include small metallic particles equally distributed within said second gasket part. Furthermore, the second gasket part may include at least one metal grid. The second gasket part 14 can be connected form-fit and/or force-fit to the surrounding receptacle area of the appliance.

The gasket 10 blocks humidity, vapour, liquids, steam and/or heat by the first gasket part 12 and the second gasket part 14. Additionally, the gasket 10 shows microwave blockage by the second gasket part 14.

In particular, the gasket 10 is provided for sealing of closed heat-charged cavities of appliance with microwave heating function. The gasket 10 may be used for all appliances for domestic and professional use with microwave heating function. Further, the gasket 10 is suitable for washing machines, laundry dryers and dish-washers, wherein at least one drying process of dishes, laundry and/or the cavity itself is improved by microwave heating. The gasket 10 is also suitable for appliances, wherein the process time is reduced by microwave heating. Moreover, the gasket 10 is suitable for appliances, wherein other functions of said appliances are improved by microwave heating. For example, the gasket 10 can be used for appliances, wherein sterilization is performed by microwave heating.

The gasket 10 may be provided for sealing two independent gaps. In particular, said gaps are adjacent to each other. The cross-section of the gaps may be arranged orthogonal or serial to each other. Further, the gasket 10 may be provided for sealing one single gap.

For example, the first gasket part 12 may be provided for a gap formed between a door at the one side and the cavity and/or a front frame on the other side. More general, the first gasket part 12 may be provided for a gap variable by the action of the user. Such a gap needs to be sealed against dirt, vapour, moist and/or steam. However, said gap must not form a microwave barrier. The microwave barrier in said gap would excessively heat up the first gasket part 12.

For example, the second gasket part 14 is provided for a gap formed between the cavity and the front frame of the appliance. More general, the second gasket part 14 is provided for a gap formed between an inner chassis part and an outer chassis part of the appliance. Such kind of gap is predetermined by the construction of the appliance, but does not depend on the action of the user. Usually, such a gap forms a thermal barrier. A microwave barrier is required in said gap.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: gasket
- 12: first gasket part
- 14: second gasket part
- 16: interconnecting gasket part

## Claims

1. A gasket (10) for a heat-charged cavity of an appliance with microwave heating function, wherein
- the gasket (10) comprises a first gasket part (12), a second gasket part (14) and an interconnecting gasket part (16),
- the first gasket part (12), the second gasket part (14) and the interconnecting gasket part (16) are elongated and their longitudinal axes are arranged parallel to each other,
- the second gasket part (14) is impermeable for steam, vapour and/or humidity,
- the first gasket part (12) is made of an elastic material or a compound of elastic materials and is resistant against high temperatures,
- the second gasket part (14) is resistant against high temperatures,
- the interconnecting gasket part (16) includes at least one flexible sheet, is resistant against high temperatures and encloses at least partially the first gasket part (12),
- the interconnecting gasket part (16) is permanently or removably connected to the first gasket part (12) at one side and to the second gasket part (14) at another side of said interconnecting gasket part (16), and
- the gasket (12) is formed as an integral part,
**characterized in that**
the first gasket part (12) is impermeable for steam, vapour and/or humidity and the second gasket part (14) includes at least one electrically conductive material and a U-shaped cross-section, wherein the at least one flexible sheet of the interconnecting gasket part (16) is partially received by the legs of the U-shaped cross-section of the second gasket part (14).

2. The gasket (10) according to claim 1,
**characterized in that**
the first gasket part (12), the second gasket part (14) and/or the interconnecting gasket part (16) are made of technical textiles, preferably on the basis of glass fibres.

3. The gasket (10) according to any one of the preceding claims,
**characterized in that**
the second gasket part (14) includes glass fibres coated by at least one electrically conductive material, preferably metallic material.

4. The gasket (10) according to any one of the preceding claims,
**characterized in that**
the second gasket part (14) includes glass fibres interwoven with fibres made of at least one electrically conductive material, preferably metallic material.

5. The gasket (10) according to any one of the preceding claims,
**characterized in that**
the second gasket part (14) includes small metallic particles equally distributed within said second gasket part (14).

6. The gasket (10) according to any one of the preceding claims,
**characterized in that**
the second gasket part (14) includes at least one metal grid.

7. An appliance with microwave heating function for domestic or professional use, wherein the appliance includes at least one heat-charged cavity enclosed by at least one gap,
**characterized in that**
the at least one gap is at least partially filled by a gasket (10) according to any one of the claims 1 to 6.

8. The appliance according to claim 7,
**characterized in that**
the appliance comprises at least two adjacent gaps, wherein a first gap is at least partially filled by the first gasket part (12) and a second gap is at least partially filled by the second gasket part (14).

9. The appliance according to claim 8,
**characterized in that**
the first gap is arranged between a door at one side and the cavity and/or a front frame at another side, wherein said first gap occurs in a closed state of the door.

10. The appliance according to claim 8 or 9,
**characterized in that**
the second gap is arranged between an inner chassis part and an outer chassis part of the appliance, in particular the second gap is arranged between the cavity and the front frame, wherein the second gap forms a thermal barrier.

11. The appliance according to any one of the claims 8 to 10,
**characterized in that**
the cross-sections of the first gap and the second gap are arranged orthogonal to each other.

12. The appliance according to any one of the claims 8 to 11
**characterized in that**
the cross-sections of the first gap and the second gap are arranged serially to each other.

## Patentansprüche

1. Dichtung (10) für einen mit Wärme beaufschlagten Hohlraum eines Geräts mit Mikrowellenheizfunktion, wobei:
- die Dichtung (10) ein erstes Dichtungsteil (12), ein zweites Dichtungsteil (14) und ein Dichtungsverbindungsteil (16) umfasst,
- das erste Dichtungsteil (12), das zweite Dichtungsteil (14) und das Dichtungsverbindungsteil (16) eine längliche Form aufweisen und ihre Längsachsen parallel zueinander angeordnet sind,
- das zweite Dichtungsteil (14) für Wasserdampf, Dampf bzw. Feuchtigkeit undurchlässig ist,
- das erste Dichtungsteil (12) aus einem elastischen Material oder aus einer Mischung von elastischen Materialien hergestellt ist und gegenüber hohen Temperaturen beständig ist,
- das zweite Dichtungsteil (14) gegenüber hohen Temperaturen beständig ist,
- das Dichtungsverbindungsteil (16) wenigstens eine biegsame Folie umfasst, gegenüber hohen Temperaturen beständig ist und wenigstens zum Teil das erste Dichtungsteil (12) umschließt,
- das Dichtungsverbindungsteil (16) mit dem ersten Dichtungsteil (12) auf einer Seite und mit dem zweiten Dichtungsteil (14) auf einer anderen Seite des Dichtungsverbindungsteils (16) dauerhaft oder abnehmbar befestigt ist, und
- die Dichtung (12) einteilig ausgebildet ist,
**dadurch gekennzeichnet, dass**
das erste Dichtungsteil (12) undurchlässig für Wasserdampf, Dampf bzw. Feuchtigkeit ist und das zweite Dichtungsteil (14) wenigstens ein elektrisch leitfähiges Material und einen U-förmigen Querschnitt aufweist, wobei die wenigstens eine biegsame Folie des Dichtungsverbindungsteils (16) von den Schenkeln des U-förmigen Querschnitts des zweiten Dichtungsteils (14) teilweise aufgenommen ist.

2. Dichtung (10) nach Anspruch 1,
**dadurch gekennzeichnet, dass**
das erste Dichtungsteil (12), das zweite Dichtungsteil (14) bzw. das Dichtungsverbindungsteil (16) aus technischen Textilien, vorzugsweise auf der Basis von Glasfasern hergestellt ist.

3. Dichtung (10) nach einem der vorhergehenden Ansprüche,
**dadurch gekennzeichnet, dass**
das zweite Dichtungsteil (14) Glasfasern aufweist, die mit wenigstens einem elektrisch leitfähigen Material, vorzugsweise mit einem metallischen Material beschichtet sind.

4. Dichtung (10) nach einem der vorhergehenden Ansprüche,
**dadurch gekennzeichnet, dass**
das zweite Dichtungsteil (14) Glasfasern aufweist, die mit Fasern verwoben sind, die aus wenigstens einem elektrisch leitfähigen Material, vorzugsweise aus einem metallischen Material hergestellt sind.

5. Dichtung (10) nach einem der vorhergehenden Ansprüche,
**dadurch gekennzeichnet, dass**
das zweite Dichtungsteil (14) kleine metallische Partikel aufweist, die in dem zweiten Dichtungsteil (14) gleichmäßig verteilt sind.

6. Dichtung (10) nach einem der vorhergehenden Ansprüche,
**dadurch gekennzeichnet, dass**
das zweite Dichtungsteil (14) wenigstens ein Metallgitter aufweist.

7. Gerät mit Mikrowellenheizfunktion für einen häuslichen oder professionellen Einsatz, wobei das Gerät wenigstens einen mit Wärme beaufschlagten Hohlraum umfasst, der von wenigstens einem Spalt umgeben ist,
**dadurch gekennzeichnet, dass**
der wenigstens eine Spalt wenigstens teilweise mit einer Dichtung (10) nach einem der Ansprüche 1 bis 6 gefüllt ist.

8. Gerät nach Anspruch 7,
**dadurch gekennzeichnet, dass**
das Gerät wenigstens zwei aneinander grenzende Spalte umfasst, wobei ein erster Spalt wenigstens teilweise mit dem ersten Dichtungsteil (12) gefüllt ist und ein zweiter Spalt wenigstens teilweise mit dem zweiten Dichtungsteil (14) gefüllt ist.

9. Gerät nach Anspruch 8,
**dadurch gekennzeichnet, dass**
der erste Spalt zwischen einer Tür auf einer Seite und dem Hohlraum bzw. einem vorderen Rahmen auf einer anderen Seite angeordnet ist, wobei der erste Spalt in einem geschlossenen Zustand der Tür entsteht.

10. Gerät nach Anspruch 8 oder 9,
**dadurch gekennzeichnet, dass**
der zweite Spalt zwischen einem inneren Gehäuseteil und einem äußeren Gehäuseteil des Geräts angeordnet ist, insbesondere dass der zweite Spalt zwischen dem Hohlraum und dem vorderen Rahmen angeordnet ist, wobei der zweite Spalt eine Wärmebarriere bildet.

11. Gerät nach einem der Ansprüche 8 bis 10,
**dadurch gekennzeichnet, dass**
die Querschnitte des ersten Spalts und des zweiten Spalts zueinander senkrecht angeordnet sind.

12. Gerät nach einem der Ansprüche 8 bis 11,
**dadurch gekennzeichnet, dass**
die Querschnitte des ersten Spalts und des zweiten Spalts hintereinander angeordnet sind.

## Revendications

1. Joint d'étanchéité (10) pour une cavité chargée thermiquement d'un appareil électroménager avec une fonction de chauffage par micro-ondes, dans lequel
- le joint d'étanchéité (10) comprend une première partie de joint d'étanchéité (12), une deuxième partie de joint d'étanchéité (14) et une partie d'interconnexion de joint d'étanchéité (16),
- la première partie de joint d'étanchéité (12), la deuxième partie de joint d'étanchéité (14) et la partie d'interconnexion de joint d'étanchéité (16) sont allongées et leurs axes longitudinaux sont disposés parallèlement les uns aux autres,
- la deuxième partie de joint d'étanchéité (14) est imperméable à la vapeur d'eau, la vapeur et/ou l'humidité,
- la première partie de joint d'étanchéité (12) est constituée d'un matériau élastique ou d'un composé de matériaux élastiques et est résistante aux températures élevées,
- la deuxième partie de joint d'étanchéité (14) est résistante aux températures élevées,
- la partie d'interconnexion de joint d'étanchéité (16) comporte au moins une feuille souple, est résistante aux températures élevées et entoure au moins partiellement la première partie de joint d'étanchéité (12),
- la partie d'interconnexion de joint d'étanchéité (16) est reliée de façon permanente ou amovible à la première partie de joint d'étanchéité (12) sur un côté et à la deuxième partie de joint d'étanchéité (14) sur un autre côté de ladite partie d'interconnexion de joint d'étanchéité (16), et
- le joint d'étanchéité (12) est formé d'une seule pièce,
**caractérisé en ce que**
la première partie de joint d'étanchéité (12) est imperméable à la vapeur d'eau, la vapeur et/ou l'humidité et la deuxième partie de joint d'étanchéité (14) comporte au moins un matériau électriquement conducteur et une section transversale en forme de U, l'au moins une feuille souple de la partie d'interconnexion de joint d'étanchéité (16) étant partiellement reçue par les pattes de la section transversale en forme de U de la deuxième partie de joint d'étanchéité (14).

2. Joint d'étanchéité (10) selon la revendication 1,
**caractérisé en ce que**
la première partie de joint d'étanchéité (12), la deuxième partie de joint d'étanchéité (14) et/ou la partie d'interconnexion de joint d'étanchéité (16) sont constituées de textiles techniques, de préférence à base de fibres de verre.

3. Joint d'étanchéité (10) selon l'une quelconque des revendications précédentes,
**caractérisé en ce que**
la deuxième partie de joint d'étanchéité (14) comporte des fibres de verre enrobées d'au moins un matériau électriquement conducteur, de préférence d'un matériau métallique.

4. Joint d'étanchéité (10) selon l'une quelconque des revendications précédentes,
**caractérisé en ce que**
la deuxième partie de joint d'étanchéité (14) comporte des fibres de verre entrelacées avec des fibres constituées d'au moins un matériau électriquement conducteur, de préférence d'un matériau métallique.

5. Joint d'étanchéité (10) selon l'une quelconque des revendications précédentes,
**caractérisé en ce que**
la deuxième partie de joint d'étanchéité (14) comporte de petites particules métalliques distribuées uniformément à l'intérieur de ladite deuxième partie de joint d'étanchéité (14).

6. Joint d'étanchéité (10) selon l'une quelconque des revendications précédentes,
**caractérisé en ce que**
la deuxième partie de joint d'étanchéité (14) comporte au moins une grille métallique.

7. Appareil électroménager avec une fonction de chauffage par micro-ondes pour un usage domestique ou professionnel, l'appareil électroménager comportant au moins une cavité chargée thermiquement entourée par au moins un espace,
**caractérisé en ce que**
l'au moins un espace est au moins partiellement rempli par un joint d'étanchéité (10) selon l'une quelconque des revendications 1 à 6.

8. Appareil électroménager selon la revendication 7,
**caractérisé en ce que**
l'appareil électroménager comprend au moins deux espaces adjacents, un premier espace étant au moins partiellement rempli par la première partie de joint d'étanchéité (12) et un deuxième espace étant au moins partiellement rempli par la deuxième partie de joint d'étanchéité (14).

9. Appareil électroménager selon la revendication 8,
**caractérisé en ce que**
le premier espace est disposé entre une porte sur un côté et la cavité et/ou un cadre avant sur l'autre côté, ledit premier espace apparaissant dans un état fermé de la porte.

10. Appareil électroménager selon la revendication 8 ou 9,
**caractérisé en ce que**
le deuxième espace est disposé entre une partie de châssis intérieur et une partie de châssis extérieur de l'appareil électroménager, en particulier le deuxième espace est disposé entre la cavité et le cadre avant, le deuxième espace formant une barrière thermique.

11. Appareil électroménager selon l'une quelconque des revendications 8 à 10,
**caractérisé en ce que**
les sections transversales du premier espace et du deuxième espace sont disposées perpendiculairement l'une à l'autre.

12. Appareil électroménager selon l'une quelconque des revendications 8 à 11,
**caractérisé en ce que**
les sections transversales du premier espace et du deuxième espace sont disposées successivement l'une par rapport à l'autre.
